(19) Europäisches Patentamt
European Patent Office
Office européen des brevets

(11) EP 1 087 326 A1

(12) **EUROPÄISCHE PATENTANMELDUNG**

(43) Veröffentlichungstag:
**28.03.2001 Patentblatt 2001/13**

(51) Int Cl.[7]: **G06K 9/62**, G08B 13/194

(21) Anmeldenummer: **99810864.1**

(22) Anmeldetag: **24.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom Systec AG**
**5506 Mägenwil (CH)**

(72) Erfinder: **Mattone, Raffaella**
**00179 Roma (IT)**

(74) Vertreter: **Roshardt, Werner Alfred, Dipl.-Phys.**
**Keller & Partner**
**Patentanwälte AG**
**Schmiedenplatz 5**
**Postfach**
**3000 Bern 7 (CH)**

(54) **Verfahren zur Bildung von Clustern**

(57) Zur Bildung von Clustern anhand einer Vielzahl von gewichteten Datenpunkten in einem vorgegebenen Bereich werden die Datenpunkte einzeln genau einem Cluster zugeordnet. Ein neuer Datenpunkt, beispielsweise ein Blob (13) wird dabei genau jenem Cluster (16) zugeordnet, zu dessen Knoten er die geringste Pseudo-Distanz aufweist. Die Pseudo-Distanz ist dabei eine Funktion des Abstandes vom Blob (13) zum Knoten (10) sowie vom Gewicht des Blobs (13) und von der Standardabweichung der als gaussisch angenommenen Verteilung der Pseudo-Distanzen aller Blobs des Clusters (16). Nach der Zuordnung zu einem Cluster (16) wird der Knoten (10) dieses Clusters (16) korrigiert, wobei der Knoten (10) vom neuen Blob (13) angezogen, von seinen Nachbarknoten jedoch abgestossen wird. Daraus ergibt sich der korrigierte Knoten (14). Auch die Standardabweichung der Gaussverteilung der Pseudo-Distanzen wird aufgrund der Pseudo-Distanz des neuen Blobs (13) zum Knoten (10) des Clusters (16) korrigiert. Durch den korrigierten Knoten (14) und die korrigierte Standardabweichung ist das korrigierte Cluster (18) bestimmt. Die Anzahl und die Verteilung der resultierenden Cluster ist dabei unabhängig von der Dichte der Blobs in den verschiedenen Regionen des vorgegebenen Bereiches.

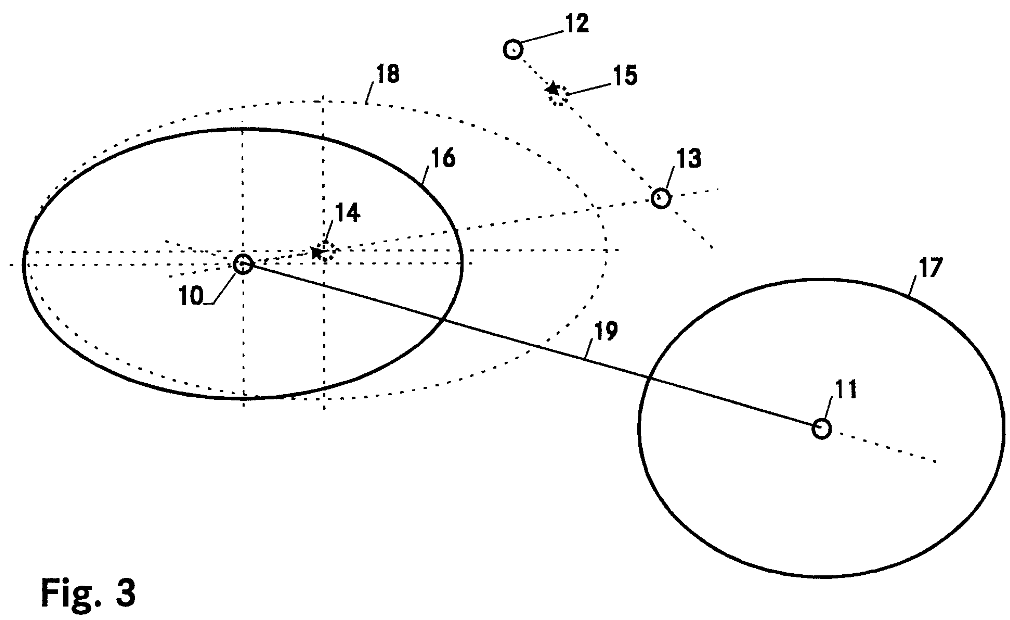


Fig. 3

EP 1 087 326 A1

## Beschreibung

### Technisches Gebiet

Die Erfindung betrifft ein Verfahren zur Bildung von zumindest einem Cluster aus einer Vielzahl von Datenpunkten in einem vorgegebenen Gebiet, sowie eine Schaltungsanordnung zur Durchführung dieses Verfahrens und eine Anwendung des Verfahrens.

### Stand der Technik

Wenn man reale Systeme und Vorgänge mit Hilfe von Modellen nachbilden will, um sie mittels mathematischer Methoden beschreiben und besser verstehen bzw. Aussagen über den Zustand und das Verhalten solcher Systeme machen zu können, muss man in vielen Fällen die Anzahl der zu berücksichtigenden Parameter bzw. Dimensionen reduzieren, da die Wirklichkeit im allgemeinen eine sehr komplexe Angelegenheit ist. Ein Beispiel dafür ist die Unterteilung eines definierten, komplexen Gebietes in eine endliche Zahl von Regionen, deren jeweilige Komplexität deutlich niedriger ist als diejenige des Gesamtgebietes.

Aus "B. Fritzke, A growing neural gas network learns topologies" erschienen in "G. Tesauro, D.S. Touretzky and T.K. Leen (Eds.), Advances in Neural Processing Systems 7, MIT Press, Cambridge MA, pp. 625-632, 1995" ist ein Verfahren bekannt, mit welchem sich eine Vielzahl von Datenpunkten, welche sich alle innerhalb eines definierten Bereiches befinden, zu sogenannten "Clustern" zusammenfassen lassen.

Die resultierende Anzahl und Verteilung der Cluster in diesem Bereich hängt dabei jedoch von der Verteilung der Datenpunkte ab. Je höher die Dichte der Datenpunkte, desto mehr Cluster werden gebildet und desto näher liegen sie beieinander. Im Hinblick auf ein möglichst einfaches Modell des Bereiches ist dies jedoch ungünstig, da die Komplexität des Modells mit der Zahl der Cluster steigt.

### Darstellung der Erfindung

Aufgabe der Erfindung ist es, ein Verfahren der eingangs genannten Art anzugeben, mit welchem sich insbesondere eine einfache Modellierung eines Gebiets mit einer Vielzahl von Datenpunkten erreichen lässt.

Die Lösung der Aufgabe ist durch die Merkmale des Anspruchs 1 definiert. Gemäss der Erfindung wird aus einer Vielzahl von Datenpunkten in einem vorgegebenen Gebiet zumindest ein, typischerweise aber eine Mehrzahl von Clustern gebildet, wobei für jedes Cluster ein Knoten bestimmt wird. Danach wird jeder Datenpunkt einzeln jeweils genau einem Cluster zugeordnet. Nach der Zuordnung eines Datenpunktes zu einem Cluster wird der Knoten dieses Clusters neu bestimmt. Diese Neubestimmung des Knotens erfolgt in Abhängigkeit des Datenpunktes, des bisherigen Knotens und der Knoten anderer Cluster.

Dieses Verfahren hat den Vorteil, dass die Anzahl der Cluster nicht von der Dichte der Datenpunkte in den verschiedenen Gebieten des Datenraumes abhängt. Damit bleibt die Komplexität des Modelles für das Gesamtgebiet überschaubar.

Vorzugsweise wird für jedes Cluster auch eine Standardabweichung bestimmt, wobei nach der Zuordnung eines Datenpunktes zu einem Cluster die Standardabweichung dieses Clusters in Abhängigkeit des Datenpunktes, des bisherigen Knotens, der bisherigen Standardabweichung und der Knoten anderer Cluster ebenfalls neu bestimmt wird.

Die Zuordnung eines Datenpunktes zu einem Cluster erfolgt aufgrund eines bestimmten Distanz-Kriteriums. Hierzu wird vorteilhafterweise zwischen einem Datenpunkt und jedem Knoten je eine Pseudo-Distanz berechnet und der Datenpunkt genau demjenigen Cluster zugeordnet, zu dessen Knoten er die kleinste Pseudo-Distanz aufweist. Da die Datenpunkte einzeln und hintereinander jeweils einem Cluster zugeordnet werden, umfassen die einzelnen Cluster mit der Zeit immer mehr Datenpunkte, womit sich die Knoten und Standardabweichungen der einzelnen Cluster immer weniger ändern.

Sind die Datenpunkte zweidimensional werden sie mit Vorteil als Elemente eines zweidimensionalen Vektorraumes angesehen. Ein Datenpunkt bzw. ein Knoten kann in einem solchen Vektorraum durch seine Koordinaten beschrieben werden. Die Pseudo-Distanz d(B,S) zwischen einem Knoten S mit den Koordinaten $(s_x,s_y)$ und einem Datenpunkt B mit den Koordinaten $(b_x,b_y)$ und einer Gewichtung $b_g$ wird somit berechnet gemäss Formel

$$(I) \qquad d(B,S) = \frac{(b_x - s_x)^2 + b_g/12}{V_x^2} + \frac{(b_y - s_y)^2 + b_g/12}{V_y^2} .$$

wobei v mit den Koordinaten $(v_x,v_y)$ die Standardabweichung des Clusters mit dem Knoten S ist. Unter der Annahme,

dass die Pseudo-Distanzen von den Datenpunkten zum Knoten eines Clusters gaussverteilt sind, können $v_x$ bzw. $v_y$ auch interpretiert werden als Standardabweichungen in x- bzw. y-Richtung der entsprechenden zweidimensionalen Gaussverteilung mit Erwartungswert Null.

Die Datenpunkte weisen häufig eine unterschiedliche Gewichtung auf. Bei der Berechnung der Pseudo-Distanzen werden daher vorzugsweise Datenpunkte mit jeweils unterschiedlicher Gewichtung $b_g$ verwendet.

Bei einer bevorzugten Ausführungsform der Erfindung werden nach der Berechnung der Pseudo-Distanzen von einem Datenpunkt zu den Knoten die beiden Knoten bestimmt, zu denen der Datenpunkt die kleinsten Pseudo-Distanzen aufweist. Der Knoten mit der kleinsten Pseudo-Distanz wird als erster Siegerknoten und der Knoten mit der zweitkleinsten Pseudo-Distanz als zweiter Siegerknoten bezeichnet. Nach der Zuordnung des Datenpunktes zum Siegercluster, d.h. zum Cluster mit dem ersten Siegerknoten, wird zwischen dem ersten und dem zweiten Siegerknoten eine topologische Verbindung eingeführt. So entsteht mit der Zeit ein Netz von untereinander teilweise verbundenen Clustern. Aus der Sicht eines bestimmten Knotens werden all jene Knoten, zu denen eine solche Verbindung besteht, als Nachbarn bezeichnet.

Das Clustering soll aber nicht zu stark durch alte Datenpunkte bestimmt werden, sondern flexibel bleiben. Deshalb soll eine einmal eingeführte Verbindung nicht ewig bestehen bleiben, sondern unter gewissen Umständen auch wieder gelöscht werden können. Eine topologische Verbindung wird bevorzugt dann gelöscht, wenn sie zu alt wird, d.h. wenn die Zeit seit ihrer Einführung eine vorgegebene Zeitschranke übersteigt, wobei die Zeitschranke beliebig gewählt werden kann. Somit würde aber jede Verbindung irgendwann einmal gelöscht werden. Hat jedoch ein Datenpunkt eine topologische Verbindung zwischen zwei Knoten zur Folge, zwischen denen bereits eine solche Verbindung besteht, wird diese erneuert, d.h. die alte Verbindung wird gewissermassen gelöscht und gleichzeitig eine neue eingeführt. Als Zeitpunkt der Einführung der topologischen Verbindung zwischen diesen beiden Knoten wird dann der Zeitpunkt der Erneuerung angeschaut und die Verbindung erst gelöscht, wenn die Zeit seit der Erneuerung die vorgegebene Zeitschranke übersteigt (vorausgesetzt, die Verbindung wird zwischenzeitlich nicht nochmals erneuert).

Um eine möglichst grosse Flexibilität zu gewährleisten, können auch Knoten gelöscht werden. Mit Vorteil wird ein Knoten genau dann gelöscht, wenn er keine Nachbarn mehr aufweist, d.h. wenn keine topologische Verbindung mehr zu einem anderen Knoten besteht.

Nach der Zuordnung eines neuen Datenpunktes B zu einem Cluster muss der Knoten S dieses Clusters neu bestimmt werden. Diese Korrektur geschieht gemäss der Formel

$$\text{(II)} \qquad S_{neu} = S+\varepsilon_a \cdot (B-S)-\varepsilon_r \cdot \frac{B-S}{\|B-S\|} .$$

$\varepsilon_a$ ist ein vorgegebener Anziehungskoeffizient und $\varepsilon_r$ ein Abstossungskoeffizient, der berechnet wird gemäss der Formel

$$\text{(III)} \qquad \varepsilon_r = \frac{1}{P_S} \cdot \sum_{N \in \{\text{Nachbarn von } S\}} \exp\left(-\left[\frac{(s_x - n_x)^2}{v_x^{\,2}} + \frac{(s_y - n_y)^2}{v_y^{\,2}}\right]\right) \cdot \frac{N-S}{\|N-S\|} * \frac{B-S}{\|B-S\|},$$

wobei $(n_x,n_y)$ die Koordinaten eines Nachbarn N des Knotens S sind und der "*" das Skalarprodukt zweier Vektoren bezeichnet. $P_S$ wird berechnet mit der Formel

$$\text{(IV)} \qquad P_s = \exp\left(-\left[\frac{(b_x - s_x)^2}{v_x^{\,2}} + \frac{(b_y - s_y)^2}{v_y^{\,2}}\right]\right).$$

Vorzugsweise wird aber nicht nur der Knoten, sondern auch die Varianz, d.h. das Quadrat der Standardabweichung $v^2 = v_x^2 + v_y^2$ eines Clusters neu berechnet, nachdem diesem Cluster ein neuer Datenpunkt zugeordnet wurde:

$$\text{(V)} \qquad v_{neu}^{\,2} = v^2 + \varepsilon \cdot (\eta - v^2).$$

ε ist ein vorgegebener Korrekturkoeffizient und für η gilt:

$$\text{(VI)} \qquad \eta^2 = \eta_x^2 + \eta_y^2$$

mit

$$\text{(VII)} \qquad \eta_x = (b_x - s_x)^2 + b_g/12 \qquad \text{und} \qquad \eta_y = (b_y - s_y)^2 + b_g/12.$$

An dieser Stelle soll noch einmal darauf aufmerksam gemacht werden, dass sich das Verfahren problemlos auf mehrere Dimensionen, d.h. die Anzahl Dimensionen ist grösser als zwei, ausdehnen lässt. Die Formeln können auf einfache Art und Weise an den mehr-dimensionalen Fall angepasst werden.

Bei einer weiteren bevorzugten Ausführungsform der Erfindung werden zu Beginn des Verfahrens einfach zwei beliebige Cluster mit jeweils einem Knoten und einer Standardabweichung vorgegeben. Dies kann sowohl manuell als auch automatisch, zufällig oder aufgrund von Vorkenntnissen über die Datenpunkte erfolgen. Danach wird mit der Zuordnung der Datenpunkte begonnen und die Knoten bzw. die Standardabweichungen der beiden Regionen jeweils neu bestimmt.

Mit Vorteil werden im Laufe des Verfahrens weitere Cluster gebildet. Hierzu werden zwei Fehlerwerte bestimmt. Einerseits pro Cluster ein Lokalfehler LF und andererseits ein gemeinsamer Globalfehler GF. Der Globalfehler weist nur einen Wert $GF_W$ auf, wohingegen jeder Lokalfehler eine bestimmte Position $LF_P$ und einen bestimmten Wert $LF_W$ aufweist.

Wie bereits erwähnt, wird ein Datenpunkt demjenigen Cluster zugeordnet, zu dessen Knoten er die kleinste Pseudo-Distanz aufweist. Handelt es sich dabei um einen sogenannten Fehlerpunkt, d.h. überschreitet die Pseudo-Distanz zwischen diesem Datenpunkt und dem Knoten eine vorgegebene Maximal-Pseudo-Distanz, wird der Datenpunkt zwar diesem Cluster zugeordnet, aber gleichzeitig werden die Werte $LF_W$ und $GF_W$ um einen bestimmten Betrag D, der berechnet wird gemäss

$$\text{(VIII)} \qquad D = -\log(p_B) \quad \text{mit} \quad p_B = \sum_{N \in \{S \cup \text{Nachbarn von } S\}} \exp(-d(B,N)),$$

erhöht. Die neue Position $LF_{Pneu}$ des Lokalfehlers berechnet sich zu

$$\text{(IX)} \qquad LF_{Pneu} = \frac{LF_P \cdot LF_W + B \cdot D}{LF_W + D}.$$

Der Wert $GF_W$ des Globalfehlers wird regelmässig, z.B. nach einer bestimmten Anzahl verarbeiteter Datenpunkte, kontrolliert. Ist $GF_W$ grösser als ein Schwellwert, wird an der aktuellen Position $LF_P$ desjenigen Lokalfehlers LF, dessen Wert $LF_W$ am grössten ist, ein neuer Knoten eingeführt. Die Standardabweichung ergibt sich aus den Pseudo-Distanzen aller Fehlerpunkte dieses Lokalfehlers zum neuen Knoten und der Schwellwert wird beispielsweise berechnet basierend auf der Annahme, dass die Pseudo-Distanzen eines Clusters gaussverteilt sind.

Die Durchführung des erfindungsgemässen Verfahrens erfolgt mit einer entsprechend ausgebildeten Schaltungsanordnung. Diese umfasst zumindest Mittel zur Eingabe der Datenpunkte, d.h. Schnittstellen zu anderen Geräten oder Vorrichtungen, über welche die Datenpunkte eingelesen werden können, sowie Mittel zur Bildung, d.h. Berechnung der Cluster.

Ein konkretes Anwendungsgebiet für dieses Verfahren ist die Videoüberwachung eines vorgegebenen Bereiches. Die Schaltungsanordnung könnte hierzu beispielsweise in einem Computer integriert sein, der an eine Videokamera angeschlossen ist. Mit der Videokamera werden in einem bestimmten zeitlichen Abstand mehrere Bilder des Überwachungsbereiches aufgenommen. Danach wird aus den Bildern Information über die Bewegung im Überwachungsbereich extrahiert und mittels Datenreduktion zu sogenannten Blobs zusammengefasst. Dies sind gewichtete Zentren von Bewegung, deren Gewicht der detektierten Bewegungsmenge entspricht. Aus den Blobs werden mit der Schaltungsanordnung entsprechend dem erfindungsgemässen Verfahren eine Mehrzahl von Clustern, d.h. Regionen des Überwachungsbereiches mit jeweils unterschiedlicher Bewegungsdichte gebildet. Diese Cluster entsprechen einfachen mathematischen Modellen von Teilen des im allgemeinen komplexen Überwachungsbereiches. Sie ermöglichen eine einfachere Erkennung von Alarmsituationen, da nicht die Gesamtsituation, sondern jeweils nur ein Cluster

einzeln bzw. einige wenige Cluster gleichzeitig untersucht werden.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1 Eine schematische Darstellung eines Überwachungsbereiches,

Fig. 2 die dem Überwachungsbereich überlagerten, während eines bestimmten Beobachtungszeitraumes erfassten Datenpunkte,

Fig. 3 eine schematische Darstellung der Vorgänge beim Clustering und

Fig. 4 eine schematische Darstellung des Überwachungsbereiches mit den berechneten Clustern.

Grundsätzlich sind in den Figuren gleiche Teile mit gleichen Bezugszeichen versehen.

## Wege zur Ausführung der Erfindung

Anhand der automatischen Überwachung eines Überwachungsbereiches, insbesondere anhand der Modellierung des Überwachungsbereiches zur einfacheren Erkennung von Alarmsituationen, soll das erfindungsgemässe Verfahren im folgenden näher erläutert werden.

In Figur 1 ist schematisch ein einzelnes, von einer Videokamera aufgenommenes Bild des zu überwachenden Bereiches dargestellt. Es zeigt ein öffentlich zugängliches Foyer einer Bank das begrenzt ist durch eine linke Seitenwand 1, eine rechte Seitenwand 2 und eine Rückwand 3. In der Rückwand 3 befindet sich eine Türe 4 und in der rechten Seitenwand ein Fenster 5. In Blickrichtung links von der Türe 4, direkt an der Rückwand 3 steht ein Bancomat 6 (ein Geldbezugsautomat).

Die Videokamera nimmt in regelmässigen Abständen, sowohl während der Schalteröffnungszeiten, wenn der Überwachungsbereich öffentlich zugänglich ist, als auch während der Nacht, wenn die Bank geschlossen ist, weitere Bilder des Überwachungsbereiches auf. Durch Vergleich von zwei aufeinanderfolgenden Bildern erhält man Informationen über die Bewegung im Überwachungsbereich während des Zeitraums zwischen den beiden Aufnahmen. Diese Information besteht aus einer Vielzahl einzelner Bewegungspunkten, welche zunächst einer Datenreduktion unterworfen werden, indem jeweils eine Mehrzahl von Bewegungspunkten gemäss vorgegebenen Kriterien zu sogenannten Blobs, gewichteten Zentren von Teilbereichen mit Bewegung, zusammengefasst werden. Dieser Vorgang wird daher Blobbing genannt. Das Zentrum eines Blobs entspricht dabei dem Schwerpunkt der Bewegungspunkte eines Teilbereiches, in dem eine zusammenhängende Bewegung detektiert wurde. Das Gewicht entspricht der geometrischen Grösse dieses Teilbereiches.

Nach der Auswertung mehrerer Bilder erhält man also eine "Karte" des Überwachungsbereiches mit einer Vielzahl von gewichteten Blobs, welche entsprechend der detektierten Bewegungen innerhalb des Überwachungsbereiches verteilt sind. Dadurch wird der Überwachungsbereich in Gebiete mit jeweils unterschiedlicher Bewegungsdichte aufgeteilt.

Figur 2 zeigt eine Karte des Überwachungsbereiches aus Figur 1 mit einer Vielzahl solcher Blobs 7, wobei der Übersicht halber nur einige wenige Blobs 7 beschriftet wurden. Aus demselben Grund wurde bei der Darstellung der Blobs 7 nur deren Position, nicht aber deren Gewichtung berücksichtigt.

Deutlich zu erkennen ist eine höhere Blobdichte vor dem Bancomaten 6 und links von der Türe 4 sowie auf dem Weg von der Türe 4 zum Bancomaten 6. Auch vor dem Fenster 5 ist im Vergleich zur Umgebung eine erhöhte Blob-Dichte festzustellen. Hervorgerufen werden die entsprechenden Blobs beispielsweise durch Bankkunden, die zur Türe 4 hereinkommen und typischerweise direkt zum Bancomaten 6 weitergehen, wobei manchmal eine gewisse Wartezeit zwischen der Türe 4 und dem Bancomaten 6 in Kauf genommen werden muss. Anschliessend verbringen die Kunden eine gewisse Zeit vor dem Bancomaten 6, während der sie z.B. Geld beziehen. Die Blobdichte vor dem Fenster 5 erklärt sich z.B. dadurch, dass einige der Kunden während der Wartezeit oder auch nach dem Geldbezug noch ans Fenster 5 treten und hinausschauen.

Die Unterteilung des Überwachungsbereiches in Abhängigkeit der Gewichtung und der Position der einzelnen Blobs, das sogenannte Clustering, wird im folgenden anhand der Figur 3 etwas detaillierter erläutert. Dabei spielt es keine Rolle, ob mit dem Clustering erst angefangen wird, wenn schon alle Blobs bekannt sind und einfach einer nach dem anderen verarbeitet wird oder ob die neu hinzukommenden Blobs der Bilder laufend Blob für Blob direkt weiterverarbeitet werden.

Figur 3 zeigt zwei bereits identifizierte Cluster 16 und 17, dargestellt jeweils durch eine Ellipse, deren Halbachsen den Varianzen des Clusters in x- bzw. y-Richtung entsprechen, mit je einem Knoten 10 bzw. 11 sowie der Lokalfehler 12 der Region 16. Kommt ein neuer Blob X 13 mit den Koordinaten $(x_x,x_y)$ und Gewichtung $x_g$ hinzu, wird zunächst die Pseudo-Distanz $d(X,S_i)$ zu den beiden Knoten 10 und 11 mit den Koordinaten $(s_{10x},s_{10y})$ bzw. $(s_{11x},s_{11y})$ berechnet gemäss der Formel

$$\text{(X)} \qquad d_i(X,S_i) = \frac{(x_x - s_{ix})^2 + x_g/12}{v_x^2} + \frac{(x_y - s_{iy})^2 + x_g/12}{v_y^2}\text{, i=10, 11}$$

$(v_x,v_y)$ sind die Koordinaten der Standardabweichung des Clusters 16, gebildet aus den Standardabweichungen $v_x$ in x- bzw. $v_y$ in y-Richtung. Der Blob X 13 wird demjenigen Cluster 16, 17 zugteilt, zu dessen Knoten 10, 11 er die geringste Pseudo-Distanz $d_{10}$ bzw. $d_{11}$ aufweist. In diesem Fall ist $d_{10}$ kleiner als $d_{11}$, folglich wird der neue Blob X 13 dem Cluster 16 mit dem Knoten 10 als ersten Siegerknoten zugeteilt. Zum Knoten 11, dem zweiten Siegerknoten, weist der Blob die zweitgeringste Pseudo-Distanz $d_{11}$ auf, weshalb zwischen den beiden Knoten 10 und 11 eine topologische Verbindung 19 eingeführt wird.

Nach der Blob-Zuteilung werden der Knoten 10 und die Varianz $v^2$ des Clusters 16, dem Siegercluster, neu bestimmt. Der Knoten 10 wird korrigiert gemäss Formel

$$\text{(XI)} \qquad S_{10neu} = S_{10} + \varepsilon_a \cdot (X - S_{10}) - \varepsilon_r \cdot \frac{X-S_{10}}{\|X-S_{10}\|}\text{,}$$

wobei $\varepsilon_a$ ein vorgegebener Anziehungskoeffizient und $\varepsilon_r$ ein Abstossungskoeffizient ist. $\varepsilon_r$ berechnet gemäss Formel

$$\text{(XII)}\ \varepsilon_r = \frac{1}{P_{S10}} \cdot \sum_{N_i \in \{\text{Nachbarn von } S10\}} \exp\left(-\left[\frac{(s_{10x} - n_{ix})^2}{v_x^2} + \frac{(s_{10y} - n_{iy})^2}{v_y^2}\right]\right) \cdot \frac{N_i - S_{10}}{\|N_i - S_{10}\|} * \frac{X - S_{10}}{\|X - S_{10}\|}$$

wobei der "*" das Skalarprodukt zweier Vektoren bezeichnet, $P_{S10}$ berechnet wird gemäss

$$\text{(XIII)} \qquad P_{S10} = \exp\left(-\left[\frac{(x_x - s_{10x})^2}{v_x^2} + \frac{(x_y - s_{10y})^2}{v_y^2}\right]\right)$$

und

$(n_{ix},n_{iy})$ die Koordinaten des i-ten Nachbarn des Knotens 10 sind.

Die Varianz $v^2$ des Clusters 16 wird neu berechnet gemäss Formel

$$\text{(XIV)} \qquad v_{neu}^2 = v^2 + \varepsilon \cdot (\eta - v^2),$$

wobei ε ein vorgegebener Korrekturkoeffizient und η mit den Koordinaten $(\eta_x,\eta_y)$ berechnet wird gemäss

$$\text{(XV)} \qquad \eta_x = (x_x - s_{10x})^2 + x_g/12 \qquad \text{bzw.} \qquad \eta_y = (x_y - s_{10y})^2 + x_g/12.$$

Damit erhält man das korrigierte Cluster 18 mit dem korrigierten Knoten 14. Ist, wie in diesem Beispiel, die Pseudo-Distanz des Blobs X 13 zum Knoten 10 grösser als die vorgegebene Maximal-Pseudo-Distanz, werden auch die Position $LF_P$ des Lokalfehlers 12 sowie die Werte $LF_W$ des Lokal- und $GF_W$ des Globalfehlers korrigiert. Der Wert beider Fehler wird erhöht um einen Wert D, der berechnet wird gemäss

$$\text{(XVI)} \qquad D = -\log(p_X) \quad \text{mit} \quad p_X = \sum_{N \in \{S \cup \text{Nachbarn von } S\ 10\}} \exp(-d(X,N)),$$

und die Position $LF_{Pneu}$ des korrigierten Lokalfehlers 15 entspricht einer Art Schwerpunkt sämtlicher Fehlerblobs dieses Clusters 16 und wird aus der alten Position $LF_P$ berechnet gemäss

$$\text{(XVII)} \qquad LF_{Pneu} = \frac{LF_P \cdot LF_W + X \cdot D}{LF_W + D}.$$

Ist dieser Fehlerblob der erste dieses Clusters, d.h. existiert noch kein Lokalfehler, wird ein neuer Lokalfehler an der Position des Fehlerblobs erstellt, wobei der Wert des neuen Lokalfehlers dem Wert D entspricht.

Nach einer bestimmten Anzahl $N_{Zyklus}$ von Zyklen, d.h. nach einer bestimmten Anzahl verarbeiteter Blobs, wird der Wert $G_W$ des Globalfehlers überprüft. Ist er grösser als eine vorgegebene Schranke, wird an der Position desjenigen Lokalfehlers mit dem grössten Wert ein neuer Knoten eingeführt. Die Schranke für den Globalfehler wird bestimmt in Abhängigkeit der angenommenen Gaussverteilungen der Blobs um die Knoten gemäss der Formel

$$\text{(XVIII)} \qquad \text{Schranke} = N_{Zyklus} \cdot P \cdot E^2.$$

P bezeichnet hierbei die Wahrscheinlichkeit, dass eine Pseudo-Distanz grösser als die Maximal-Pseudo-Distanz ist und unter E ist der Erwartungswert derjenigen Pseudo-Distanzen zu verstehen, welche grösser als die Maximal-Pseudo-Distanz sind.

Zwischen den einzelnen Zyklen werden beim Clustering auch weitere Massnahmen durchgeführt. Wird ein Blob einem von zwei Knoten, zwischen denen bereits eine topologische Verbindung besteht, zugeordnet, wird die bestehende topologische Verbindung erneuert, d.h. ihr "Alter", also die Zeitspanne seit ihrer Einführung, wird auf Null zurückgesetzt.

Weiter werden diejenigen topologischen Verbindungen, deren Einführung bzw. Erneuerung mehr als eine vorgegebene Zeitschranke zurückliegt, gelöscht.

Schliesslich werden auch diejenigen Knoten, welche keine topologischen Verbindungen zu einem anderen Knoten aufweisen, ebenfalls gelöscht.

In Figur 4 ist die den detektierten Blobs aus Figur 2 entsprechende Anordnung von Clustern und topologischen Verbindungen dargestellt. Entsprechend den "realen" Gebieten "vor dem Bancomaten 6", "links von der Türe 4", "auf dem Weg von der Türe 4 zum Bancomaten 6" und "vor dem Fenster 5", wo jeweils eine hohe Blobdichte detektiert wurde, sind durch das Clustering die Cluster 20.1, 20.2, 20.3, resp. 20.4 mit jeweils einem Knoten 21.1, 21.2, 21.3 bzw. 21.4 entstanden. Es wurden auch mehrere topologische Verbindungen 22.1 bis 22.5 zwischen den Knoten 21.1, 21.2, 21.3 bzw. 21.4 eingeführt.

Diese Cluster werden zur Erkennung von Alarmsituation benutzt, indem für jedes Cluster eine Bewegungssumme, d.h. die Summe der Gewichtung aller Blobs, die aus der zu beurteilenden Situation entstanden sind, berechnet wird. Eine solche Situation wird genau dann als Alarmsituation erkannt, wenn die Bewegungssumme eines einzelnen Clusters, oder das Produkt der Bewegungssummen zweier Cluster grösser als eine entsprechende Schranke ist. Die einzelnen Schranken werden anhand der bereits beurteilten Situationen berechnet und nach jedem neuen Bild adaptiert, so dass ein vordefinierter Prozentsatz der entsprechenden Werte unterhalb der Schranke liegt.

Zusammenfassend ist festzustellen, dass es das erfindungsgemässe Verfahren erlaubt, aus einer Vielzahl von Datenpunkten in einem vorgegebenen Bereich eine Mehrzahl von Clustern zu bilden, deren Anzahl unabhängig von der Anzahl und der Verteilung der Datenpunkte ist und so eine Möglichkeit bietet, den vorgegebenen, meist komplexen Bereich mittels einiger weniger, einfacher Modelle zu beschreiben.

## Patentansprüche

1. Verfahren zur Bildung von zumindest einem Cluster aus einer Vielzahl von Datenpunkten in einem vorgegebenen Gebiet, dadurch gekennzeichnet, dass für jedes Cluster ein Knoten bestimmt, ein Datenpunkt genau einem Cluster zugeordnet und nach der Zuordnung des Datenpunktes zu einem Cluster der Knoten dieses Clusters in Abhängigkeit des Datenpunktes, des bisherigen Knotens und der Knoten anderer Cluster neu bestimmt wird.

**2.** Verfahren nach Anspruch 1, dadurch gekennzeichnet, dass für jedes Cluster eine Standardabweichung bestimmt und nach der Zuordnung des Datenpunktes zu einem Cluster die Standardabweichung dieses Clusters in Abhängigkeit des Datenpunktes, des bisherigen Knotens, der bisherigen Standardabweichung und der Knoten anderer Cluster neu bestimmt wird.

**3.** Verfahren nach Anspruch 1 oder 2, dadurch gekennzeichnet, dass zwischen einem Datenpunkt und jedem Knoten je eine Pseudo-Distanz berechnet wird und der Datenpunkt demjenigen Cluster zugeordnet wird, zu dessen Knoten er die kleinste Pseudo-Distanz aufweist.

**4.** Verfahren nach Anspruch 3, dadurch gekennzeichnet, dass in einem zweidimensionalen Vektorraum die Pseudo-Distanz d(B,S) eines Datenpunktes B mit den Koordinaten $(b_x,b_y)$ und einer Gewichtung $b_g$ zu einem Knoten S mit den Koordinaten $(s_x,s_y)$ berechnet wird gemäss

$$\frac{(b_x - s_x)^2 + b_g/12}{v_x^2} + \frac{(b_y - s_y)^2 + b_g/12}{v_y^2},$$

wobei $(v_x,v_y)$ die Koordinaten der Standardabweichung V des Clusters mit dem Knoten S ist.

**5.** Verfahren nach Anspruch 4, dadurch gekennzeichnet, dass zur Berechnung der Pseudo-Distanz Datenpunkte mit unterschiedlicher Gewichtung $b_g$ verwendet werden.

**6.** Verfahren nach einem der Ansprüche 3 bis 5, dadurch gekennzeichnet, dass diejenigen beiden Knoten bestimmt werden, zu denen ein Datenpunkt die kleinsten Pseudo-Distanzen aufweist, dass zwischen diesen beiden Knoten eine topologische Verbindung eingeführt und diese Knoten als Nachbarn des jeweils anderen Knoten bezeichnet werden.

**7.** Verfahren nach Anspruch 6, dadurch gekennzeichnet, dass eine topologische Verbindung gelöscht wird, wenn die Zeit seit ihrer Einführung eine vorgegebene Zeitschranke übersteigt und ein Cluster gelöscht wird, sobald der Knoten dieses Clusters keine Nachbarn mehr aufweist.

**8.** Verfahren nach einem der Ansprüche 1 bis 7, dadurch gekennzeichnet, dass nach der Zuordnung eines Datenpunktes B zu einem Cluster mit einem Knoten S mit den Koordinaten $(s_x,s_y)$ der Knoten S neu bestimmt wird zu

$$S + \varepsilon_a \cdot (B-S) - \varepsilon_r \cdot \frac{B-S}{\|B-S\|},$$

wobei $\varepsilon_a$ ein vorgegebener Anziehungskoeffizient und

$$\varepsilon_r = \frac{1}{P_s} \cdot \sum_{N \in \{\text{Nachbarn von S}\}} \exp\left(-\left[\frac{(s_x - n_x)^2}{v_x^2} + \frac{(s_y - n_y)^2}{v_y^2}\right]\right) \cdot \frac{N-S}{\|N-S\|} * \frac{B-S}{\|B-S\|}$$

ein Abstossungskoeffizient mit

$$P_s = \exp\left(-\left[\frac{(b_x - s_x)^2}{v_x^2} + \frac{(b_y - s_y)^2}{v_y^2}\right]\right)$$

ist, ein Nachbar N von S die Koordinaten $(n_x,n_y)$ aufweist und mit * ein Skalarprodukt zweier Vektoren bezeichnet wird.

**9.** Verfahren nach einem der Ansprüche 2 bis 8, dadurch gekennzeichnet, dass nach der Zuordnung eines Datenpunktes B zu einem Cluster mit einem Knoten S mit den Koordinaten $(s_x,s_y)$ eine Varianz, d.h. ein Quadrat der

Standardabweichung $v^2 = v_x^2 + v_y^2$ dieses Clusters neu berechnet wird zu $v^2 + \varepsilon \cdot (\eta - v^2)$, wobei $\varepsilon$ ein vorgegebener Korrekturkoeffizient und $\eta^2 = \eta_x^2 + \eta_y^2$ mit $\eta_x = (b_x - s_x)^2 + b_g/12$ sowie $\eta_y = (b_y - s_y)^2 + b_g/12$ ist.

**10.** Verfahren nach einem der Ansprüche 1 bis 9, dadurch gekennzeichnet, dass mit zwei Clustern gestartet wird, wobei sowohl der Knoten als auch die Standardabweichung der Cluster manuell oder automatisch vorgegeben oder zufällig bestimmt werden.

**11.** Verfahren nach einem der Ansprüche 2 bis 10, dadurch gekennzeichnet, dass ein Global-Fehler und pro Cluster ein Lokal-Fehler definiert wird, wobei nach einer Zuordnung eines Datenpunktes B zu einem Cluster ein Wert $LF_W$ des Lokal-Fehlers dieses Clusters und ein Wert des Global-Fehlers um einen Wert $D = -\log(p_B)$ mit

$$p_B = \sum_{N \in \{s \cup \text{Nachbarn von } S\}} \exp(-d(B,N))$$

erhöht und eine neue Position $LF_{Pneu}$ des Lokalfehlers aus der alten Position $LF_P$ berechnet wird zu

$$LF_{Pneu} = \frac{LF_P \cdot LF_W + B \cdot D}{LF_W + D},$$

wenn die Pseudo-Distanz zwischen diesem Datenpunkt und dem Knoten dieses Clusters eine Maximal-Pseudo-Distanz überschreitet, und dass ein neuer Cluster hinzugefügt wird, wenn der Global-Fehler einen vorgegebenen Schwellwert übersteigt, wobei der Knoten des neuen Clusters an der aktuellen Position $LF_{Pneu}$ desjenigen Lokal-Fehlers mit dem grössten Wert $LF_W$ eingefügt wird.

**12.** Schaltungsanordnung zur Durchführung des Verfahrens nach einem der Ansprüche 1 bis 11, dadurch gekennzeichnet, dass die Schaltungsanordnung Mittel zur Eingabe der Datenpunkte sowie Mittel zur Bildung der Cluster aufweist.

**13.** Anwendung des Verfahrens nach einem der Ansprüche 1 bis 10 zur Bildung eines mathematischen Modells eines Überwachungsbereiches zur Erkennung von ausserordentlichen Situationen innerhalb des Überwachungsbereiches.

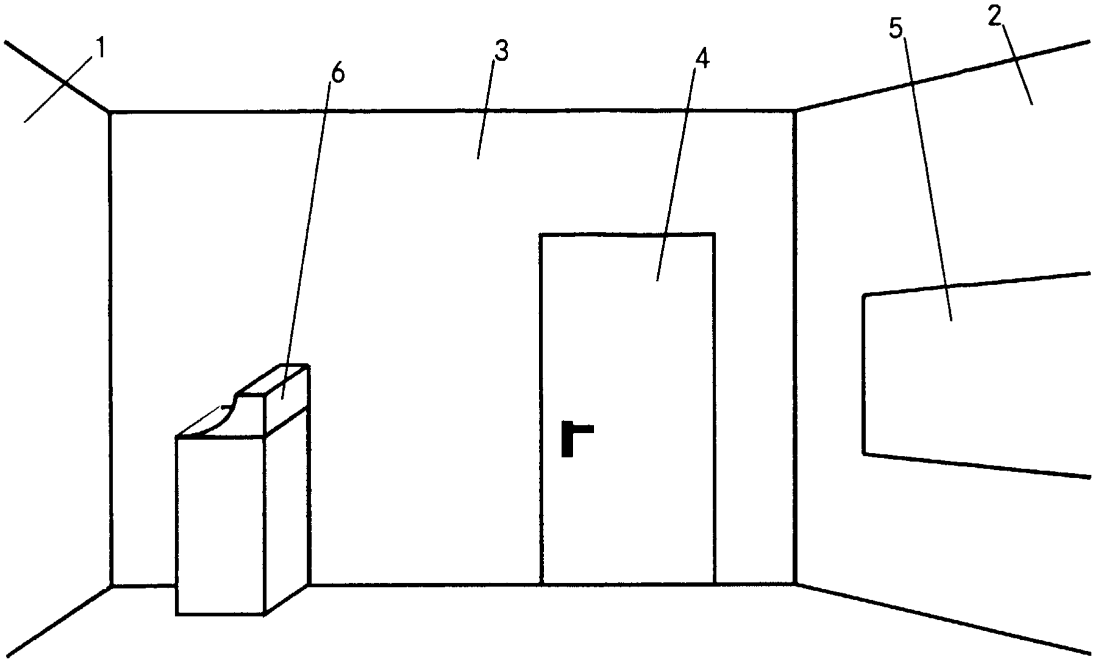


Fig. 1

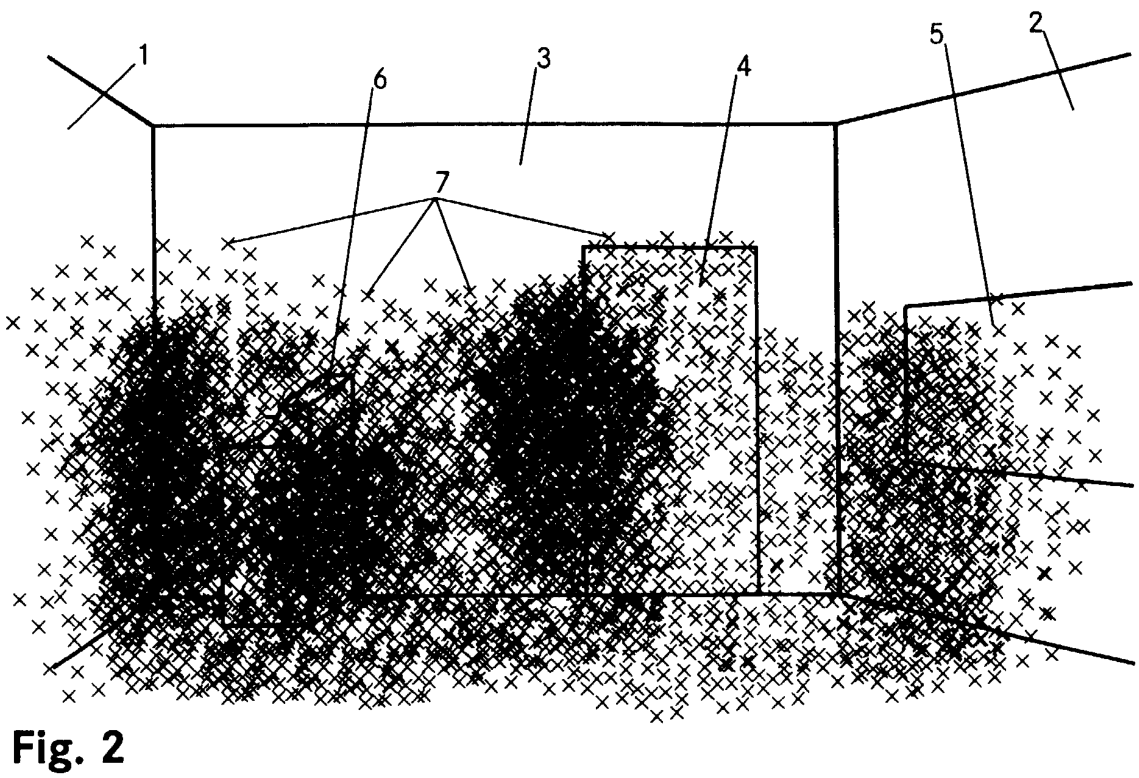


Fig. 2

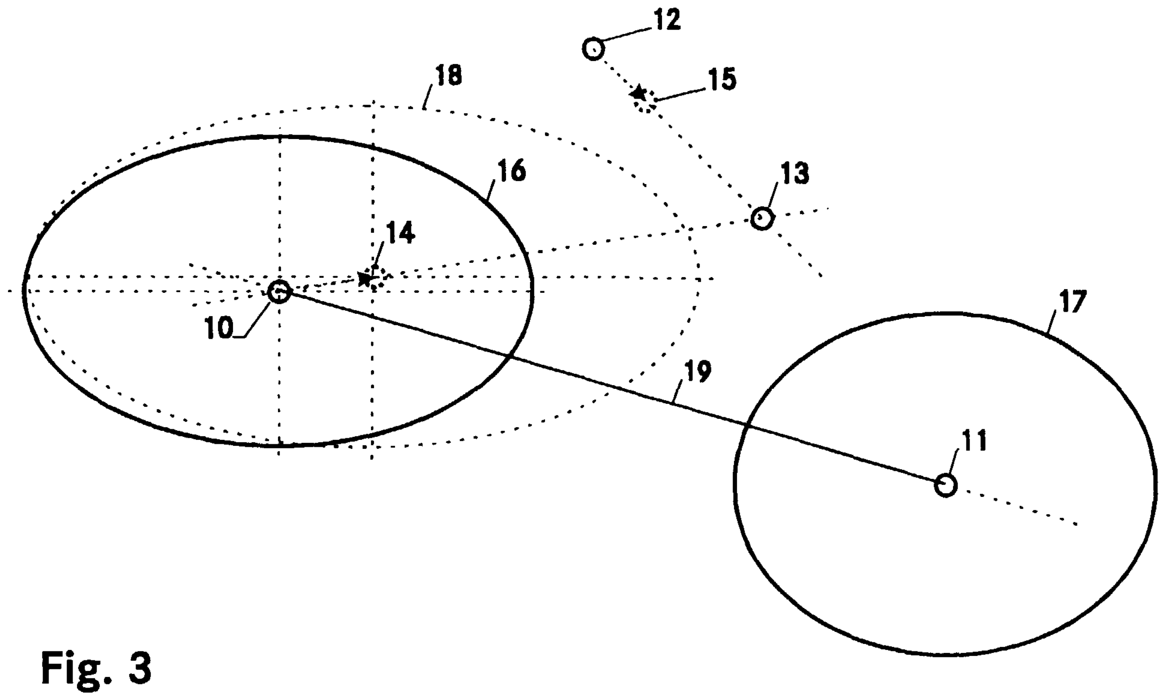
12
15
18
13
16
14
10
17
19
11

Fig. 3

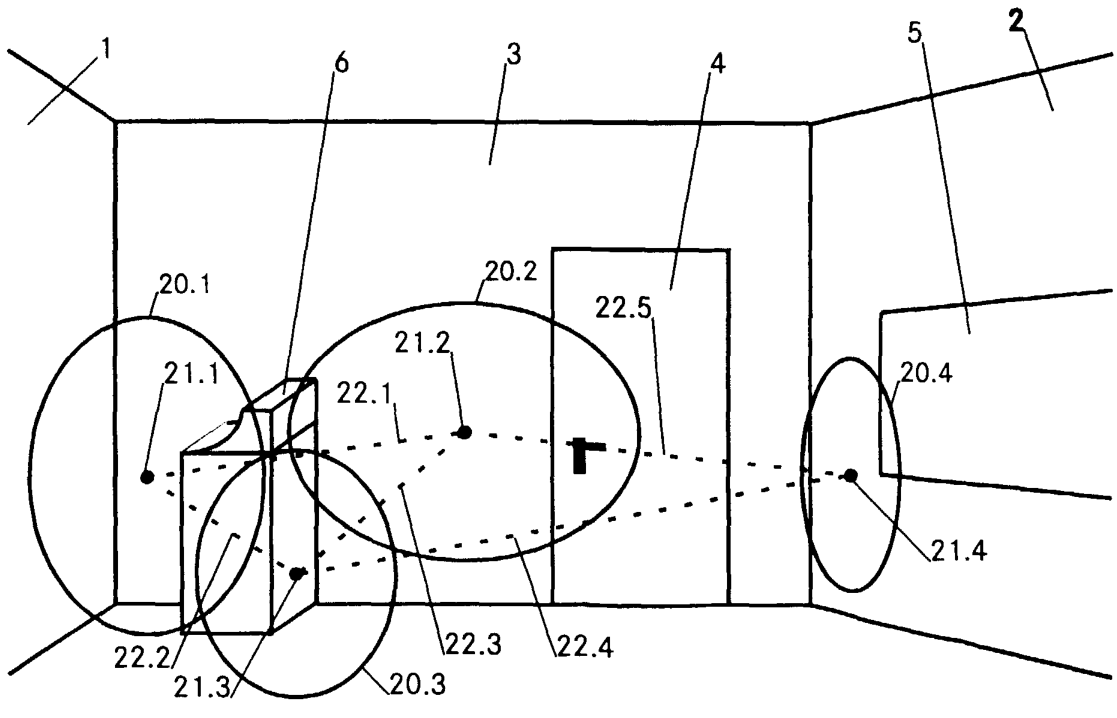
1
6
3
4
5
2
20.1
20.2
22.5
21.2
21.1
22.1
20.4
21.4
22.2
21.3
22.3
22.4
20.3

Fig. 4

Europäisches Patentamt

# EUROPÄISCHER RECHERCHENBERICHT

Nummer der Anmeldung
EP 99 81 0864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KEINOSUKE FUKUNAGA: "Introduction to Statistical Pattern Recognition"<br>1990 , ACADEMIC PRESS, INC , LONDON<br>XP002140074<br>* Seite 509, Zeile 3 von unten - Seite 512, Zeile 21 *<br>----- | 1-3,12 | G06K9/62<br>G08B13/194 |

| RECHERCHIERTE SACHGEBIETE (Int.Cl.7) |
|---|
| G06K |

Der vorliegende Recherchenbericht wurde für alle Patentansprüche erstellt

| Recherchenort | Abschlußdatum der Recherche | Prüfer |
|---|---|---|
| DEN HAAG | 14. Juni 2000 | Sonius, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)